# EUROPÄISCHE PATENTSCHRIFT

(11) **EP 0 587 053 B1**
(45) Veröffentlichungstag und Bekanntmachung des Hinweises auf die Patenterteilung: **18.12.1996**
(21) Anmeldenummer: 93114110.5
(22) Anmeldetag: 03.09.1993
(51) Int. Cl.: B60B 3/02, B60B 21/10

(54) **Felge für Räder**
Rim for wheels
Jante pour roues

(30) Priorität: 05.09.1992 DE 9211991 U
(43) Veröffentlichungstag der Anmeldung: 16.03.1994
(73) Patentinhaber: Von Muschwitz, Jo, D-88662 Überlingen (DE)
(72) Erfinder: Von Muschwitz, Jo, D-88662 Überlingen (DE)
(74) Vertreter: Kohl, Karl-Heinz

(56) Entgegenhaltungen:
- EP-A- 0 412 275
- DE-A- 2 647 464
- GB-A- 1 403 374
- US-A- 1 897 375
- US-A- 2 354 439

## Beschreibung

Die Erfindung betrifft eine Felge für Räder nach dem Oberbegriff des Anspruches 1.

Bei bekannten Rädern für Pkws sitzt der Reifen auf einer Felge, die ein äußeres und ein inneres Felgenhorn hat, das den Reifen radial innen übergreift. Der Überstand ist verhältnismäßig gering. Darum kommt es immer wieder vor, daß der Reifen von der Felge abspringt. Außerdem ist die Seitenführung des Reifens nicht optimal.

Bei der bekannten Felge (DE-A-26 47 464) liegen die Reifenanlageflächen auf unterschiedlichen Radien. Das äußere Felgenhorn steht von der benachbarten Reifenanlagefläche radial nach außen weniger weit ab als das innere Felgenhorn von seiner benachbarten Reifenanlagefläche. Darum ist auch bei dieser Felge die Seitenführung des Reifens gering. Außerdem besteht die Gefahr, daß der Reifen von der Felge abspringt.

Es ist eine Felge bekannt (EP-A-0 377 096), bei der die beiden Reifenanlageflächen ebenfalls auf unterschiedlichen Radien liegen. Die beiden Felgenhörner stehen von den benachbarten Reifenanlageflächen radial gleich weit ab. Dieser Überstand der Felgenhörner über die Reifenanlageflächen ist verhältnismäßig gering, so daß auch bei dieser Felge die Gefahr besteht, daß der Reifen von ihr abspringt. Außerdem ist die Seitenführung des Reifens nicht optimal.

Der Erfindung liegt die Aufgabe zugrunde, die gattungsgemäße Felge so auszubilden, daß sie dem Reifen eine gute Seitenführung gibt und zuverlässig verhindert, daß der Reifen von der Felge abspringt.

Diese Aufgabe wird bei der gattungsgemäßen Felge erfindungsgemäß mit den kennzeichnenden Merkmalen des Anspruches 1 gelöst.

Bei der erfindungsgemäßen Felge erstreckt sich das äußere Felgenhorn von seiner Reifenanlagefläche aus radial weiter nach außen als das innere Felgenhorn von seiner Reifenanlagefläche. Dadurch hat die erfindungsgemäße Felge ein verbreitertes äußeres Felgenhorn, das dem Reifen nicht nur einen guten seitlichen Halt und damit eine optimale Seitenführung gibt, sondern auch zuverlässig verhindert, daß der Reifen von der Felge springt. Darüber hinaus verleiht das äußere breitere Felgenhorn dem Rad ein sportliches Aussehen. Zum Beispiel wirkt eine 15''-Felgen-Reifen-Kombination wie eine 17''-Felgen-Reifen-Kombination. Das verbreiterte äußere Felgenhorn kann einteilig mit der Felge ausgebildet oder ein gesonderter Ring sein, der an herkömmlichen Felgen nachträglich befestigt werden kann.

Weitere Merkmale der Erfindung ergeben sich aus den weiteren Ansprüchen, der Beschreibung und den Zeichnungen.

Die Erfindung wird nachstehend anhand dreier in den Zeichnungen dargestellter Ausführungsbeispiele näher beschrieben. Es zeigt:
- Fig. 1: eine erfindungsgemäße Felge mit aufgezogenem Reifen,
- Fig. 2: in schematischer Darstellung die Felge nach Fig. 1 in Seitenansicht
1 in Seitenansicht,
- Fig. 3: die Felge mit aufgezogenem Reifen nach Fig. 1 in perspektivischer Darstellung,
- Fig. 4: die Felge nach Fig. 1 in perspektivischer Darstellung,
- Fig. 5: eine herkömmliche Felge mit aufgezogenem Reifen,
- Fig. 6: in schematischer Darstellung die Felge nach Fig. 5 in Seitenansicht,
- Fig. 7: eine zweite Ausführungsform einer erfindungsgemäßen Felge mit aufgezogenem Reifen in perspektivischer Darstellung,
- Fig. 8: die Felge nach Fig. 7 in Explosivdarstellung,
- Fig. 9 und 10: eine dritte Ausführungsform einer erfindungsgemäßen Felge in Darstellungen entsprechend den Fig. 7 und 8.

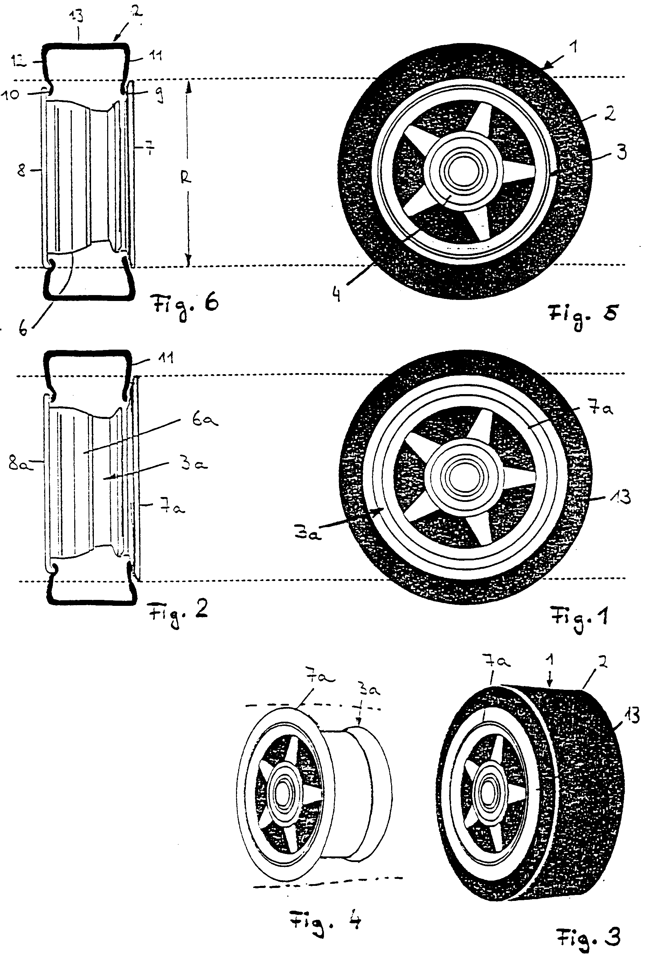

Die Fig. 5 und 6 zeigen ein herkömmliches Rad 1 mit einem Reifen 2, der auf einer Felge 3 mit einem Radstern 4 sitzt. Die Felge 3 hat einen hohlen Felgenkörper 6, auf dem der Reifen 2 sitzt und der an beiden Rohrenden jeweils ein Felgenhorn 7 und 8 aufweist. Mit den Felgenhörnern 7, 8 wird der Reifen 2 in bekannter Weise auf der Felge 3 seitlich geführt. Die Innenränder 9 und 10 werden von den Felgenhörnern 7 und 8 radial überragt, die an den beiden Reifenflanken 11 und 12 anliegen. Zwischen den Reifenflanken 11 und 12 verläuft die Reifenlauffläche 13.

Die beiden Felgenhörner 7 und 8 haben gleichen Außendurchmesser R. Sie übergreifen nur die radial inneren Ränder 9 und 10 des Reifens 2; sie ragen daher nur wenig in den Bereich der Reifenflanken 11 und 12.

Bei der erfindungsgemäßen Felge 3a (Fig. 1 bis 4) hat das außenseitige Felgenhorn 7a wesentlich größeren Außendurchmesser R als das innenseitige Felgenhorn 8a. Das Felgenhorn 7a erstreckt sich radial bis in die Reifenflanke 11. Vorzugsweise ist das Felgenhorn 7a nahezu doppelt so breit wie das innenliegende Felgenhorn 8a und reicht bis annähernd in halbe radiale Breite der Reifenflanke 11, in Achsrichtung der Felge 3a gesehen. Das Felgenhorn 7a ist einstückig mit dem Felgenkörper 6a ausgebildet. Infolge des breiten Felgenhornes 7a wird der Reifen 1a seitlich optimal abgestützt. Insbesondere schützt das breite Felgenhorn 7a den Reifen 1a vom Abspringen von der Felge 3a, die aus Stahl oder Metallguß, aber auch zumindest teilweise aus Kunststoff bestehen kann.

Das im Außendurchmesser R große Felgenhorn 7a läßt das Rad 1a im Durchmesser größer erscheinen, als es tatsächlich ist. Dadurch wird dem Rad auch ein sportliches Aussehen verliehen. Beispielsweise wirkt ein 15''-Rad wie ein 17''-Rad, ohne daß wesentliche Veränderungen an der Radkonstruktion notwendig sind. Der Reifen 1a läßt sich von der Seite des Felgenhornes 8a aus leicht auf die Felge 3a schieben, so daß trotz des breiten Felgenhornes 7a eine einfache Reifenmontage gewählt ist. Im übrigen ist die Felge 3a gleich ausgebildet wie beim zuvor beschriebenen bekannten Rad.

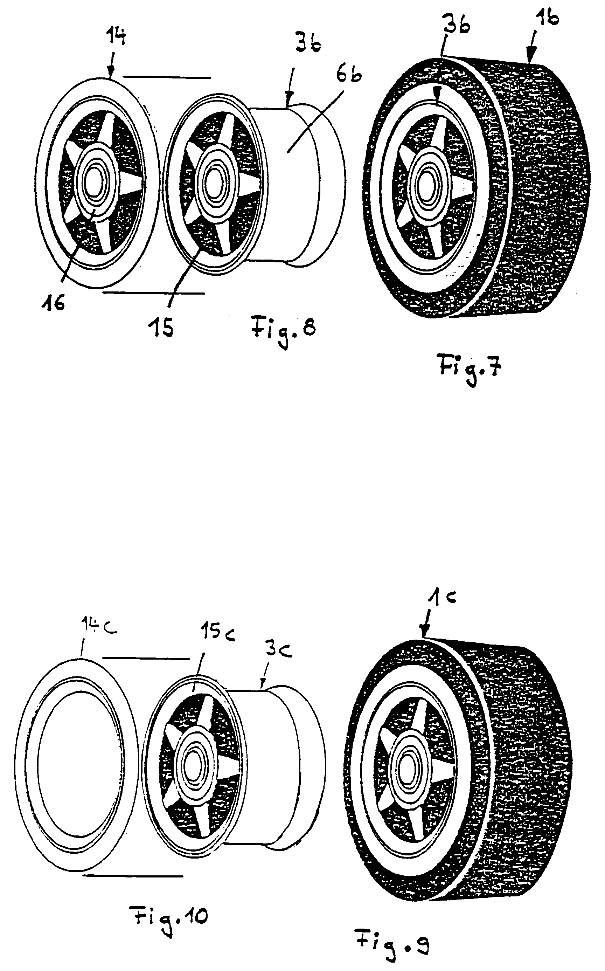

Die Ausführungsform nach Fig. 7 und 8 unterscheidet sich von der zuvor beschriebenen Ausführungsform dadurch, daß die randseitige Verbreiterung der Felge 3b durch ein an ihr gesondert angeordnetes Felgenhorn 14 vorgesehen ist. Es wird lösbar am Felgenkörper 6b befestigt. Das Felgenhorn 14 in Form des lösbaren Ringes hat vorteilhaft gleiche Breite und Ausbildung wie das Felgenhorn 7a gemäß den Fig. 1 bis 4. Es ist konisch ausgebildet und wird am Felgenkörper 6b mit (nicht dargestellten) Klemm- oder Rastteilen, Schrauben oder dgl. befestigt. Die Klemm- und/oder Rastteile können beispielsweise über die Rückseite des Felgenhornes 14 ragende Hakenteile sein, die einen Innenrand 15 des Felgenkörpers 3b in Raststellung übergreifen. Im dargestellten Ausführungsbeispiel weist das Felgenhorn 14 einen Felgenstern 16 auf, der in montierter Lage des Ringes deckungsgleich zum Radstern 4 des Felgenkörpers 3b liegt. Das Felgenhorn 14 kann beispielsweise aus Metall, wie Aluminium, oder auch aus Kunststoff bestehen. Der Felgenkörper 6b besteht wie bei den bekannten Felgen aus Aluminium oder Stahl. Diese Felgenausbildung hat den Vorteil, daß bei Beschädigung und/oder Verschleiß das Felgenhorn 14 einfach und schnell ausgewechselt werden kann. Es muß nicht die gesamte Felge 3b ausgetauscht werden.

Das Felgenhorn 14 kann auch an herkömmlichen Felgen nachträglich befestigt werden. Die am Felgenhorn vorgesehenen Befestigungsteile sind vorteilhaft so ausgebildet, daß sie das äußere Felgenhorn der herkömmlichen Felge hintergreifen. Beispielsweise können die Befestigungsteile als Rasthaken ausgebildet sein, die mit ihren Hakenteilen das äußere Felgenhorn der herkömmlichen Felge hintergreifen. Die herkömmliche Felge kann aber auch so ausgebildet sein, daß sie im Bereich ihrer Außenseite am Übergang vom Felgenhorn zum Felgenkörper einen Rand aufweist, der von den Rasthaken des Felgenhornes 14 hintergriffen wird.

Infolge der beschriebenen Ausbildung läßt sich ein sportliches Aussehen auf konstruktiv sehr einfache und kostengünstige Weise erreichen, da lediglich das Felgenhorn 14 nachträglich an der herkömmlichen Felge befestigt werden muß. Außerdem hat es den Vorteil, daß die Felge 3b selbst geschont wird und sich das Felgenhorn 14 bei Beschädigung einfach auswechseln läßt.

Von dieser Ausführungsform unterscheidet sich die Ausführungsform nach den Fig. 9 und 10 nur dadurch, daß anstelle des Felgenhornes 14 mit dem Felgenstern 16 nur ein einfaches ringförmiges Felgenhorn 14c vorgesehen ist, das - wie zuvor beschrieben - beispielsweise durch Klemmung oder Verschraubung an der Felge 3c befestigt werden kann. Die Felge 3c ist wie beim vorigen Ausführungsbeispiel eine herkömmliche Felge. Um das Felgenhorn 14c zu verbreitern bzw. um die Reifenbreite optisch zu verringern, ist das als Ring ausgebildete Felgenhorn 14c vorgesehen, das entsprechend dem vorigen Ausführungsbeispiel an der Felge 3c befestigt wird. Das Felgenhorn 14c ist im wesentlichen gleich ausgebildet wie das Felgenhorn 14; es weist lediglich keinen Felgenstern auf. Das Felgenhorn 14c wird auf das Felgenhorn 15c der Felge 3c aufgesetzt, die vorteilhaft aus Aluminium oder Stahl besteht. Das Felgenhorn 14c dient als Radzierblende. Im übrigen entspricht diese Radausbildung 1c dem Rad 1b gemäß den Fig. 7 und 8.

Die beschriebenen Felgen können selbstverständlich auch aus mehr als zwei Teilen zusammengesetzt sein.

So kann beispielsweise auch das andere, im Durchmesser kleinere Felgenhorn ein gesondertes Teil sein, das in geeigneter Weise an der Felge befestigt wird. Auch das Mitteilteil 16 könnte ein gesondertes Teil der Felge sein.

## Patentansprüche

1. Felge für Räder, insbesondere für Räder von Pkws, mit einem Felgenkörper (6a, 6b), der an beiden axialen Enden jeweils ein Felgenhorn (7a, 14, 14c; 8a) aufweist, das von einer Reifenanlagefläche aus sich radial nach außen erstreckt und von denen das äußere Felgenhorn (7a, 14, 14c) größeren Außendurchmesser hat als das innere Felgenhorn (8a),
dadurch gekennzeichnet, daß sich das äußere Felgenhorn (7a, 14, 14c) von der Reifenanlagefläche aus weiter radial nach außen erstreckt als das innere Felgenhorn (8a).

2. Felge nach Anspruch 1,
dadurch gekennzeichnet, daß das äußere Felgenhorn (7a) einteilig mit dem Felgenkörper (6a) ausgebildet ist.

3. Felge nach Anspruch 1 oder 2,
dadurch gekennzeichnet, daß die Felge (3a, 3b, 3c) aus Stahl oder Aluminium besteht.

4. Felge nach Anspruch 1 oder 3,
dadurch gekennzeichnet, daß das äußere Felgenhorn (14, 14c) lösbar mit dem Felgenkörper (6b) verbunden ist.

5. Felge nach Anspruch 4,
dadurch gekennzeichnet, daß das äußere Felgenhorn (14, 14c) klemmend und/oder mit einer Verschraubung am Felgenkörper (6b) befestigt ist.

6. Felge nach einem der Ansprüche 1 und 3 bis 5,
dadurch gekennzeichnet, daß das äußere Felgenhorn (14, 14c) als Ring ausgebildet ist.

7. Felge nach Anspruch 6,
dadurch gekennzeichnet, daß das äußere Felgenhorn (14) mit einem Mittelteil (16), vorzugsweise einem Felgenstern versehen ist.

8. Felge nach einem der Ansprüche 1 und 3 bis 7,
dadurch gekennzeichnet, daß das äußere Felgenhorn (14, 14c) an einer herkömmlichen Felge (3b, 3c) befestigbar ist.

9. Felge nach einem der Ansprüche 1 und 3 bis 8,
dadurch gekennzeichnet, daß das äußere Felgenhorn (14, 14c) aus Metall und/oder aus Kunststoff besteht.

## Claims

1. A rim for wheels, in particular for wheels of passenger cars, with a rim body (6a, 6b) provided at both axial ends with one respective rim flange (7a, 14, 14c; 8a) which extends radially outwards from a tyre-abutment face and of which the outer rim flange (7a, 14, 14c) has a larger external diameter than the inner rim flange (8a), **characterized in that** the outer rim flange (7a, 14, 14c) extends further outwards radially from the tyre-abutment face than the inner rim flange (8a).

2. A rim according to Claim 1, **characterized in that** the outer rim flange (7a) is formed integrally with the rim body (6a).

3. A rim according to Claim 1 or 2, **characterized in that** the rim (3a, 3b, 3c) consists of steel or aluminium.

4. A rim according to Claim 1 or 3, **characterized in that** the outer rim flange (14, 14c) is releasably connected to the rim body (6b).

5. A rim according to Claim 4, **characterized in that** the outer rim flange (14, 14c) is secured to the rim body (6b) by clamping and/or by screw fastening.

6. A rim according to one of Claims 1 and 3 to 5, **characterized in that** the outer rim flange (14, 14c) is constructed as a ring.

7. A rim according to Claim 6, **characterized in that** the outer rim flange (14) is provided with a middle part (16), preferably a rim "star".

8. A rim according to one of Claims 1 and 3 to 7, **characterized in that** the outer rim flange (14, 14c) can be secured to a conventional rim (3b, 3c).

9. A rim according to one of Claims 1 and 3 to 8, **characterized in that** the outer rim flange (14, 14c) consists of metal and/or of plastics material.

## Revendications

1. Jante pour roues, en particulier pour roues de voitures particulières, comprenant un corps de jante (6a, 6b) qui comporte aux deux extrémités axiales un rebord de jante respectif (7a, 14, 14c ; 8a) qui s'étend depuis une surface d'appui de pneumatique radialement vers l'extérieur, et parmi lesquels le rebord de jante extérieur (7a, 14, 14c) présente un diamètre extérieur plus important que le rebord de jante intérieur (8a),
caractérisée en ce que le rebord de jante extérieur (7a, 14, 14c) s'étend radialement vers l'extérieur plus loin depuis la surface d'appui de pneumatique que le rebord de jante intérieur (8a).

2. Jante selon la revendication 1, caractérisée en ce que le rebord de jante extérieur (7a) est réalisé d'une seule pièce avec le corps de jante (6a).

3. Jante selon l'une ou l'autre des revendications 1 et 2, caractérisée en ce que la jante (3a, 3b, 3c) est réalisée en acier ou en aluminium.

4. Jante selon l'une ou l'autre des revendications 1 et 3, caractérisée en ce que le rebord de jante extérieur (14, 14c) est relié de façon détachable au corps de jante (6b).

5. Jante selon la revendication 4, caractérisée en ce que le rebord de jante extérieur (14, 14c) est fixé par serrage et/ou avec un vissage sur le corps de jante (6b).

6. Jante selon l'une quelconque des revendications 1 et 3 à 5, caractérisée en ce que le rebord de jante extérieur (14, 14c) est réalisé sous forme d'un anneau.

7. Jante selon la revendication 6, caractérisée en ce que le rebord de jante extérieur (14) est pourvu d'une pièce médiane (16), de préférence une étoile de jante.

8. Jante selon l'une quelconque des revendications 1 et 3 à 7, caractérisée en ce que le rebord de jante extérieur (14, 14c) est susceptible d'être fixé sur une jante ordinaire (3b, 3c).

9. Jante selon l'une quelconque des revendications 1 et 3 à 8, caractérisée en ce que le rebord de jante extérieur (14, 14c) est réalisé en métal et/ou en matière plastique.
